# FASCICULE DE BREVET EUROPEEN

(11) **EP 4 521 016 B1**
(45) Date de publication et mention de la délivrance du brevet: **01.04.2026**
(21) Numéro de dépôt: 24190210.5
(22) Date de dépôt: 23.07.2024
(51) Int. Cl.: F17C 13/00

(54) **RÉCEPTACLE POUR RACCORD CRYOGÉNIQUE ET ENSEMBLE COMPRENANT UN TEL RÉCEPTACLE**
BEHÄLTER FÜR EINE KRYOGENE VERBINDUNG UND ANORDNUNG MIT SOLCH EINEM BEHÄLTER
RECEPTACLE FOR CRYOGENIC CONNECTOR AND ASSEMBLY COMPRISING SUCH A RECEPTACLE

(30) Priorité: 07.09.2023 FR 2309431
(43) Date de publication de la demande: 12.03.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: COLEIRO, Gaetan, 38360 Sassenage (FR)
(74) Mandataire: Air Liquide

(56) Documents cités:
- WO-A1-2021/093985
- WO-A1-2022/225442
- FR-A1- 3 104 671
- US-A- 5 301 723
- US-A1- 2018 354 778

## Description

L'invention concerne un réceptacle pour recevoir un raccord cryogénique et un ensemble comprenant un tel réceptacle et un raccord cryogénique.

L'invention concerne plus particulièrement un réceptacle pour recevoir un raccord cryogénique de remplissage entre deux utilisations, le réceptacle comprenant un fourreau tubulaire comportant une entrée et un fond et délimitant un logement tubulaire configuré pour accueillir de façon étanche un raccord de forme générale cylindrique.

Pour raccourcir les durées des phases de connexions et de déconnexions de flexibles de transfert de fluides cryogéniques (LNG, LH2, ...) on utilise des raccords (ou buses) de type à connexion rapide.

Ces technologies permettent une auto-obturation de l'extrémité du raccord qui réduit le besoin de purge et de réchauffage par rapport à des raccords type classiques de type "Johnston".

Cette technologie permet notamment une déconnexion à froid du raccord. Après la déconnexion, le raccord est froid, ce qui provoque généralement un dépôt de givre (voir la condensation d'air autour du raccord pour le cas de l'hydrogène). Ce givre doit être évacué pour éviter que cette eau se loge dans les volumes morts du raccord (ceci peut générer une fuite ou une accumulation de glace au fur et à mesure de l'utilisation du flexible).

Si la durée entre deux remplissages est trop longue (notamment pendant la nuit), les entrées thermiques sur le flexibles imposent de remettre à chaud le flexible pour limiter la montée en pression. Ceci implique de devoir refaire une mise en froid du flexible avant le prochaine utilisation. Ceci allonge les durées des transferts de fluide.

Dans certaines configurations, raccourcir les durées des remplissages est un enjeu clé.

Dans la plupart des stations de remplissage de carburant, les flexibles sont munis de raccords ou pistolets avec des réceptacles de rangements entre les différents remplissages.

Pour les fluides froids ou cryogéniques, il est connu de nettoyer les raccords suite à leur utilisation pour enlever les dépôts de givre qui se forment. Cela peut notamment être fait directement dans le réceptacle en soufflant de l'air sec lorsque celui-ci est rangé.

Les documents WO21093985A1, FR3104671A1, WO 2022/225442 A1 et US20180354778A1 décrivent des réceptacles pour raccords cryogéniques mais qui répondent imparfaitement aux exigences d'utilisation.

Le besoin de réchauffage/séchage avant chaque remplissage devient donc crucial pour éviter les dépôts de givre/glace.

Un but de la présente invention est de pallier tout ou partie des inconvénients de l'art antérieur relevés ci-dessus.

A cette fin, le réceptacle selon l'invention, par ailleurs conforme à la définition générique qu'en donne le préambule ci-dessus, est essentiellement caractérisé en ce que le réceptacle comprenant en outre un module de séchage muni d'organe(s) d'accrochage amovible sur l'extrémité du fourreau tubulaire délimitant le fond, c'est-dire que le module de séchage peut être disposé dans une première position accroché sur l'extrémité du fourreau et une seconde position détachée du fourreau, le module de séchage comprenant un canal de circulation de flux de gaz de séchage, le fond du fourreau comprenant un clapet d'admission configuré pour être relié avec le canal de circulation lorsque le module de séchage est dans sa première position et admettre un flux de gaz de séchage dans le fourreau, le réceptacle comportant un ensemble de joint(s) d'étanchéité configuré(s) pour coopérer avec le raccord et isoler le volume intérieur du fourreau par rapport à l'extérieur du fourreau.

Par ailleurs, des modes de réalisation de l'invention peuvent comporter l'une ou plusieurs des caractéristiques suivantes :
- le clapet d'admission est un clapet anti-retour,
- le fourreau comprend un clapet d'évacuation configuré pour évacuer une éventuelle surpression dans le fourreau, le clapet d'évacuation étant par exemple un clapet anti-retour,
- le module de séchage comprend un organe de chauffage, par exemple une résistance et une source de gaz de séchage sous pression ou une extrémité destinée à être reliée à une source de gaz de séchage sous pression chauffé,
- le fourreau tubulaire est isolé thermiquement, par exemple à structure à double parois isolée sous vide entre les parois,
- le réceptacle comporte un mécanisme de verrouillage configuré pour coopérer avec le raccord et assurer blocage amovible du raccord dans le fourreau,
- le réceptacle comporte un détecteur de présence de raccord dans le fourreau et/ou un capteur de température dans le fourreau,
- le réceptacle comporte un système de mise au vide du volume interne du fourreau.

L'invention concerne également un ensemble comprenant une conduite de transfert de fluide munie d'un raccord fluidique et un réceptacle selon l'une quelconque des caractéristiques ci-dessus ou ci-dessous, comprenant un ensemble de joint(s) torique(s) d'étanchéité disposé(s) au niveau de l'entrée du fourreau et/ou sur le raccord.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures.

### Brève description des figures

L'invention sera mieux comprise à la lecture de la description qui va suivre donnée uniquement à titre d'exemple et faite en se référant aux dessins annexés dans lesquels :
[Fig. 1] est une vue schématique en coupe d'un réceptacle selon un mode de réalisation possible de l'invention dans une première configuration,

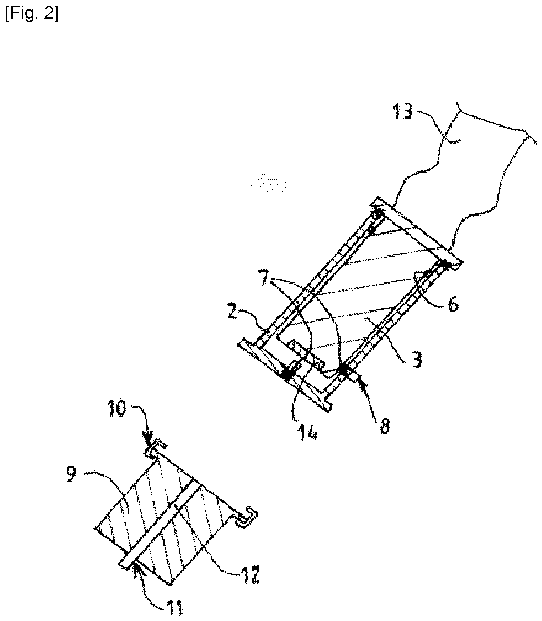

[Fig. 2] est une vue schématique en coupe du réceptacle précité dans une seconde configuration,

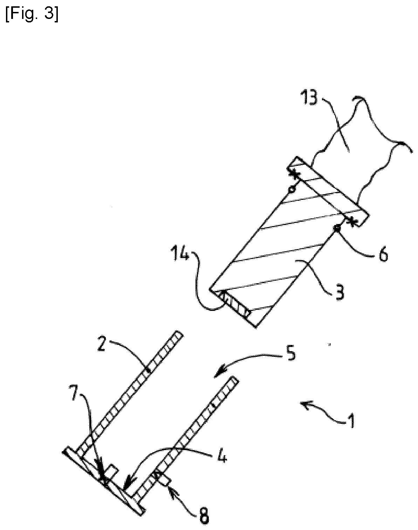

[Fig. 3] est une vue schématique en coupe du réceptacle précité dans une troisième configuration,

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

Le réceptacle 1 illustré est configuré pour recevoir un raccord 3 cryogénique de remplissage entre deux utilisations. Un tel raccord 3 (parfois appelé buse ou pistolet) a par exemple une forme générale cylindrique est situé à une extrémité d'un tuyau 13 flexible de transfert de fluide cryogénique. Ce raccord 3 possède au moins un clapet 14, notamment un clapet auto-obturant qui est représenté schématiquement.

Le réceptacle 1 comprend un corps en forme de fourreau 2 tubulaire. Ce fourreau comporte une entrée 5 et un fond 4 et délimite un logement tubulaire configuré pour accueillir le raccord 3. Le fourreau 2 est formé de parois de préférence isolées thermiquement.

Le fond 4 peut être situé au-dessus de son entrée 5 en configuration d'utilisation de sorte que l'extrémité terminale du raccord 3 y est maintenue orientée vers le haut en position rangée dans le réceptacle 1.

Le réceptacle 1 comprend en outre un module 9 de séchage muni d'organe(s) d'accrochage 10 amovible sur l'extrémité du fourreau 2 tubulaire délimitant le fond 4, c'est-dire que le module 9 de séchage peut être disposé dans une première position accroché sur l'extrémité du fourreau 2 et une seconde position détachée du fourreau 2. Par exemple, les organe(s) d'accrochage 10 peuvent comprendre un système de crochet(s) et/ou un système d'attache par déformation élastique.

Le module 9 de séchage comprend un canal 12 de circulation de flux de gaz de séchage qui débouche au niveau d'une extrémité du module 9 de séchage.

Le module 9 de séchage comprend par exemple un organe de chauffage, par exemple une résistance et une source de gaz de séchage sous pression ou une extrémité destinée à être reliée à une source de gaz de séchage sous pression, de préférence chauffé.

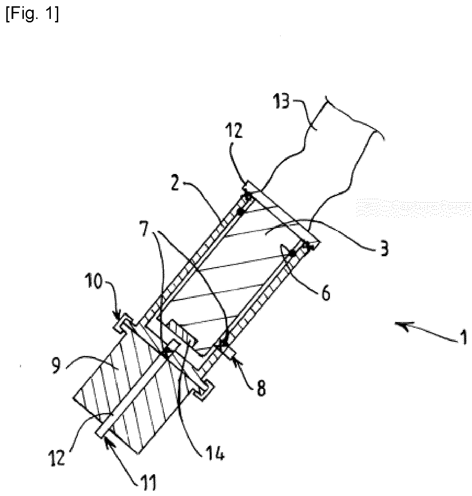

Le fond 4 du fourreau 2 comprend un clapet 7 d'admission configuré pour être relié avec le canal 12 de circulation lorsque le module 9 de séchage est dans sa première position et admettre un flux de gaz de séchage dans le fourreau 2 (cf. [Fig. 1]).

Comme illustré, le fourreau 2 comprend également de préférence un clapet 8 d'évacuation configuré pour évacuer une éventuelle surpression dans le fourreau 2.

Le clapet 7 d'admission et/ou le clapet 8 d'évacuation peut être un clapet anti-retour, par exemple un clapet qui s'ouvre selon le différentiel de pression auxquelles ses extrémités sont soumises.

L'architecture proposée permet notamment de réchauffer/sécher le raccord 3 mais aussi de le garder isolé du milieu extérieur lors de ses déplacements. Ceci tend à minimiser le givre ou la glace et donc les probabilités de fuite des joints.

Le réceptacle possède un moyen de réchauffage/séchage et un fourreau 2 formant un couvercle étanche amovible permettant de garder le raccord isolé et protégé du milieu extérieur lors des phases de déplacements.

Le module 9 de séchage permet de réchauffer et/ou sécher le raccord 3 dans le fourreau 2.

Ce séchage peut être assuré par une circulation de gaz sec (air ou azote par exemple). Le fourreau 2 permet d'isoler le raccord 3 du milieu extérieur. Ce fourreau peut être raccordé mécaniquement au module 9 de séchage pour permettre le réchauffage du raccord 3.

Ce fourreau 2 est de préférence étanche tout comme sa liaison mécanique avec le raccord 3. L'ensemble fourreau 2 et module 9 de séchage peut être est orienté de façon à faciliter l'évacuation de l'eau mais aussi pour garantir que les gouttelettes et cristaux soufflés lors du dégivrage ne s'amassent pas à proximité du clapet 14 du raccord.

Par exemple, le fourreau 2 peut être orienté suivant n'importe quelle orientation mais les orientations préférées seraient de 60° à 30° (extrémité avec le fond 4 nez pointant vers le bas) et -30° à -90° (extrémité avec le fond 4 pointant vers le haut).

De même, les entrée 7 et sortie 8 du gaz de séchage peuvent être placés de manière à optimiser le réchauffage/séchage.

Un exemple d'utilisation peut comporter tout ou partie des étapes suivantes.

Après utilisation du raccord (remplissage d'un réservoir par exemple) le raccord 3 est séparé du réservoir rempli.

Le fourreau 2 est enfilé sur le raccord 3 (ou le raccord est introduit dans le fourreau 2). Le fourreau 2 est relié mécaniquement et de façon étanche au raccord 3. Ceci est réalisé de préférence avec un niveau d'étanchéité déterminé par rapport au milieu extérieur pour assurer une isolation vis-à-vis de l'humidité.

L'ensemble comprenant le raccord 3 et le fourreau 2 peut être déplacé vers le module de séchage 9 (ou inversement) en étant protégé du milieu extérieur.

L'ensemble comprenant le raccord 3 et le fourreau 2 est raccordé mécaniquement au module 9 de séchage.

Après un éventuel verrouillage mécanique 10 entre le fourreau 2 et le module 9 de séchage, du gaz de séchage peut être mis en circulation pour balayer le raccord 3 dans le fourreau 2. Ceci permet d'évacuer le givre qui s'est déposé. Le déclenchement de ce balayage peut être déclencher manuellement et/ou par la détection du raccordement et/ou après la mise en froid du raccord 3, c'est-à-dire avant le prochain remplissage (ou après).

Ce balayage gazeux peut être prévu pour une durée prédéterminée, par exemple entre 2 et 120min et/ou en fonction d'un seuil de température prédéterminé mesuré atteint (par exemple entre zéro et -70°C). Une sonde de température peut être installée dans le fourreau 2 pour déterminer la fin du dégivrage (et l'amorce du tirage au vide le cas échéant).

Lorsque le balayage de gaz est interrompu le raccord 3 est prêt pour le prochain remplissage.

Avant le prochain remplissage, le raccord 3 muni de son fourreau 2 peut être séparé du module 9 de séchage et être déplacé vers le réservoir à remplir en étant protégé du milieu extérieur (via le fourreau 2). Pendant cette étape, le raccord 3 et le fourreau 2 restent solidaires mais sont séparés du module 9 de séchage.

A proximité du réservoir à remplir, le fourreau 2 peut être retiré du raccord 3 et le raccord 3 peut être raccordé au réservoir à remplir.

Le gaz de séchage peut être de l'azote, de l'air sec, de l'hélium ou tout autre gaz ou mélange approprié.

Ce gaz de séchage peut être préchauffé pour accélérer le séchage (dans le module 9 ou en amont). Le chauffage peut être réalisé par conduction et/ou circulation de gaz.

On pourrait envisager de rendre monobloc le mode de chauffage et le fourreau 2.

Le fourreau peut être mis sous vide.

Le fourreau 2 peut être à structure à double paroi avec isolation thermique. Cette isolation thermique comprendre un vide (avec isolation multicouches et/ou mousses, silice, ...), ou sans vide (mousses, fibre de verre, ...). Cet espace inter-parois peut être communicant ou non avec l'espace interne du fourreau 2. En cas de communication, ceci peut permettre mettre sous vide conjointement les deux volumes lors de l'utilisation.

La face externe de la paroi interne de la double paroi (surface en regard de l'espace inter paroi) peut être revêtue d'un revêtement ou un état de surface particulier ayant coefficient de réflexion limitant les entrées thermiques par radiation.

La détection du raccord 3 dans le fourreau 2 peut être réalisée de façon optique et/ou mécanique et/ou inductive.

Il est possible de prévoir un collecteur pour faciliter la gestion et l'évacuation de l'eau récupérée en bas du fourreau 2.

Ainsi, le réceptacle possède un fourreau 2 formant un couvercle de préférence étanche amovible qui minimise le givre ou la glace et donc les probabilités de fuite des joints de clapet 14 ou l'entrée de glace dans les lignes/réservoir. Ce fourreau peut être détachable mécaniquement du module 9 de séchage.

L'invention est particulièrement avantageuse pour une utilisation dans des stations de remplissage de réservoirs d'hydrogène liquide (voitures, camions, avions, bateau) pour minimiser les temps entre deux remplissages successifs et pour limiter les fuites dues au givre. La structure est particulièrement avantageuse pour les installations de remplissage (type bateau) où la distance à parcourir est relativement grande entre le réceptacle de la station et le réservoir à remplir.

## Revendications

1. Réceptacle pour recevoir un raccord (3) cryogénique de remplissage entre deux utilisations, le réceptacle (1) comprenant un fourreau (2) tubulaire comportant une entrée (5) et un fond (4) et délimitant un logement tubulaire configuré pour accueillir de façon étanche un raccord (3) de forme générale cylindrique, le réceptacle (1) comprenant en outre un module (9) de séchage muni d'organe(s) d'accrochage (10) amovible sur l'extrémité du fourreau (2) tubulaire délimitant le fond (4), c'est-dire que le module (9) de séchage peut être disposé dans une première position accroché sur l'extrémité du fourreau (2) et une seconde position détachée du fourreau (2), le module (9) de séchage comprenant un canal (12) de circulation de flux de gaz de séchage, **caractérisé en ce que** le fond (4) du fourreau (2) comprend un clapet (7) d'admission configuré pour être relié avec le canal (12) de circulation lorsque le module (9) de séchage est dans sa première position et admettre un flux de gaz de séchage dans le fourreau (2), le réceptacle comportant un ensemble de joint(s) (6) d'étanchéité configuré(s) pour coopérer avec le raccord (3) et isoler le volume intérieur du fourreau par rapport à l'extérieur du fourreau (2).

2. Réceptacle selon la revendication 1, **caractérisé en ce que** le clapet (7) d'admission est un clapet anti-retour.

3. Réceptacle selon la revendication 1 ou 2, **caractérisé en ce que** le fourreau (2) comprend un clapet (8) d'évacuation configuré pour évacuer une éventuelle surpression dans le fourreau (2), le clapet (8) d'évacuation étant par exemple un clapet anti-retour.

4. Réceptacle selon l'une quelconque des revendications 1 à 3, **caractérisé en ce que** le module (9) de séchage comprend un organe de chauffage, par exemple une résistance et une source de gaz de séchage sous pression ou une extrémité destinée à être reliée à une source de gaz de séchage sous pression chauffé.

5. Réceptacle selon l'une quelconque des revendications 1 à 4, **caractérisé en ce que** le fourreau (2) tubulaire est isolé thermiquement, par exemple à structure à double parois isolée sous vide entre les parois.

6. Réceptacle selon l'une quelconque des revendications 1 à 5, **caractérisée en ce qu'**il comporte un mécanisme (12) de verrouillage configuré pour coopérer avec le raccord (3) et assurer blocage amovible du raccord (3) dans le fourreau (2).

7. Réceptacle selon l'une quelconque des revendications 1 à 6, **caractérisé en ce qu'**il comporte un détecteur (12) de présence de raccord dans le fourreau (2) et/ou un capteur de température dans le fourreau (2).

8. Réceptacle selon l'une quelconque des revendications 1 à 7, **caractérisé en ce qu'**il comporte un système de mise au vide du volume interne du fourreau (2)

9. Ensemble comprenant un conduite (13) de transfert de fluide munie d'un raccord (3) fluidique et un réceptacle selon l'une quelconque des revendications 1 à 8, **caractérisé en ce que** qu'il comprend un ensemble de joint(s) (6) torique(s) d'étanchéité disposé(s) au niveau de l'entrée (5) du fourreau et/ou sur le raccord (3).

## Patentansprüche

1. Ein Behälter zur Aufnahme einer kryogenen Füllkupplung (3) zwischen zwei Verwendungen, wobei der Behälter (1) eine rohrförmige Hülse (2) umfasst, die einen Einlass (5) und einen Boden (4) aufweist und einen rohrförmigen Hohlraum begrenzt, der so konfiguriert ist, dass er eine Kupplung (3) von allgemein zylindrischer Form dicht aufnimmt, wobei der Behälter (1) ferner ein Trocknungsmodul (9) umfasst, das mit abnehmbarem/n Befestigungsorgan(en) (10) am Ende der rohrförmigen Hülse (2), das den Boden (4) begrenzt, versehen ist, das heißt, dass das Trocknungsmodul (9) in einer ersten Position, die am Ende der Hülse (2) befestigt ist, und in einer zweiten Position, die von der Hülse (2) gelöst ist, angeordnet werden kann, wobei das Trocknungsmodul (9) einen Kanal (12) zur Zirkulation eines Trocknungsgasstroms umfasst, **dadurch gekennzeichnet, dass** der Boden (4) der Hülse (2) ein Einlassventil (7) umfasst, das so konfiguriert ist, dass es mit dem Zirkulationskanal (12) verbunden ist, wenn sich das Trocknungsmodul (9) in seiner ersten Position befindet, und einen Trocknungsgasstrom in die Hülse (2) einlässt, wobei der Behälter einen Satz von Dichtung(en) (6) umfasst, die so konfiguriert sind, dass sie mit der Kupplung (3) zusammenwirken und das Innenvolumen der Hülse gegenüber der Außenseite der Hülse (2) isolieren.

2. Behälter nach Anspruch 1, **dadurch gekennzeichnet, dass** das Einlassventil (7) ein Rückschlagventil ist.

3. Behälter nach Anspruch 1 oder 2, **dadurch gekennzeichnet, dass** die Hülse (2) ein Auslassventil (8) umfasst, das so konfiguriert ist, dass es einen eventuellen Überdruck in der Hülse (2) ablässt, wobei das Auslassventil (8) beispielsweise ein Rückschlagventil ist.

4. Behälter nach einem der Ansprüche 1 bis 3, **dadurch gekennzeichnet, dass** das Trocknungsmodul (9) ein Heizelement, beispielsweise einen Widerstand, und eine Quelle für unter Druck stehendes Trocknungsgas oder ein Ende umfasst, das dazu bestimmt ist, mit einer Quelle für unter Druck stehendes, erwärmtes Trocknungsgas verbunden zu werden.

5. Behälter nach einem der Ansprüche 1 bis 4, **dadurch gekennzeichnet, dass** die rohrförmige Hülse (2) wärmeisoliert ist, beispielsweise durch eine doppelwandige Struktur, die durch Vakuum zwischen den Wänden isoliert ist.

6. Behälter nach einem der Ansprüche 1 bis 5, **dadurch gekennzeichnet, dass** er einen Verriegelungsmechanismus (12) umfasst, der so konfiguriert ist, dass er mit der Kupplung (3) zusammenwirkt und eine abnehmbare Verriegelung der Kupplung (3) in der Hülse (2) sicherstellt.

7. Behälter nach einem der Ansprüche 1 bis 6, **dadurch gekennzeichnet, dass** er einen Detektor (12) für die Anwesenheit der Kupplung in der Hülse (2) und/oder einen Temperatursensor in der Hülse (2) umfasst.

8. Behälter nach einem der Ansprüche 1 bis 7, **dadurch gekennzeichnet, dass** er ein System zum Evakuieren des Innenvolumens der Hülse (2) umfasst.

9. Eine Anordnung, umfassend eine Fluidtransferleitung (13), die mit einer Fluidkupplung (3) versehen ist, und einen Behälter nach einem der Ansprüche 1 bis 8, **dadurch gekennzeichnet, dass** sie einen Satz von O-Ring-Dichtung(en) (6) umfasst, die am Einlass (5) der Hülse und/oder an der Kupplung (3) angeordnet sind.

## Claims

1. A receptacle for receiving a cryogenic filling coupling (3) between two uses, the receptacle (1) comprising a tubular sleeve (2) having an inlet (5) and a bottom (4) and defining a tubular housing configured to sealingly receive a coupling (3) of generally cylindrical shape, the receptacle (1) further comprising a drying module (9) provided with removable fastening member(s) (10) on the end of the tubular sleeve (2) defining the bottom (4), that is to say that the drying module (9) can be arranged in a first position attached to the end of the sleeve (2) and a second position detached from the sleeve (2), the drying module (9) comprising a channel (12) for circulating a flow of drying gas, **characterized in that** the bottom (4) of the sleeve (2) comprises an admission valve (7) configured to be connected with the circulation channel (12) when the drying module (9) is in its first position and to admit a flow of drying gas into the sleeve (2), the receptacle comprising a set of seal(s) (6) configured to cooperate with the coupling (3) and to isolate the internal volume of the sleeve from the outside of the sleeve (2).

2. The receptacle according to claim 1, **characterized in that** the admission valve (7) is a non-return valve.

3. The receptacle according to claim 1 or 2, **characterized in that** the sleeve (2) comprises an evacuation valve (8) configured to evacuate a possible overpressure in the sleeve (2), the evacuation valve (8) being for example a non-return valve.

4. The receptacle according to any one of claims 1 to 3, **characterized in that** the drying module (9) comprises a heating element, for example a resistor, and a source of pressurized drying gas or an end intended to be connected to a source of pressurized, heated drying gas.

5. The receptacle according to any one of claims 1 to 4, **characterized in that** the tubular sleeve (2) is thermally insulated, for example with a double-walled structure insulated by vacuum between the walls.

6. The receptacle according to any one of claims 1 to 5, **characterized in that** it comprises a locking mechanism (12) configured to cooperate with the coupling (3) and to ensure removable locking of the coupling (3) in the sleeve (2).

7. The receptacle according to any one of claims 1 to 6, **characterized in that** it comprises a detector (12) for the presence of the coupling in the sleeve (2) and/or a temperature sensor in the sleeve (2).

8. The receptacle according to any one of claims 1 to 7, **characterized in that** it comprises a system for placing the internal volume of the sleeve (2) under vacuum.

9. An assembly comprising a fluid transfer line (13) provided with a fluidic coupling (3) and a receptacle according to any one of claims 1 to 8, **characterized in that** it comprises a set of O-ring seal(s) (6) arranged at the inlet (5) of the sleeve and/or on the coupling (3).
